# EUROPEAN PATENT SPECIFICATION

(11) **EP 3 328 618 B1**
(45) Date of publication and mention of the grant of the patent: **31.03.2021**
(21) Application number: 16754184.6
(22) Date of filing: 09.08.2016
(51) Int. Cl.: B29C 65/48, B29C 65/78, B29C 65/00, F03D 1/06, B29L 31/08

(54) **WIND TURBINE BLADE BONDLINES**
WINDTURBINENBLATTKLEBSCHICHTEN
LIGNES DE LIAISON DE PALE D'ÉOLIENNE

(30) Priority: 11.08.2015 DK 201570519
(43) Date of publication of application: 06.06.2018
(73) Proprietor: Vestas Wind Systems A/S, 8200 Aarhus N (DK)
(72) Inventor: SMITH, Jonathan, Burridge Hampshire SO31 1BL (GB); SANDERCOCK, Stephen, Ryde Isle of Wight PO33 1LG (GB); WARDROPPER, Steve, New Milton Hampshire BH25 7AB (GB)
(74) Representative: Vestas Patents Department
(86) International application number: PCT/DK2016/050269
(87) International publication number: WO 2017/025103

(56) References cited:
- WO-A1-2014/086703
- US-A1- 2006 243 382

## Description

### Technical field

The present invention relates generally to the manufacture of wind turbine blades, and more specifically to an improved method of bonding a shear web to a wind turbine blade shell.

### Background

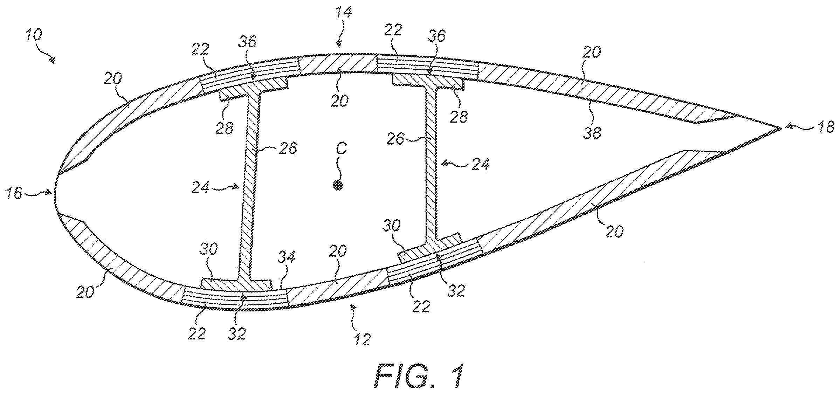

Wind turbine blades, such as the long blades employed on modern utility-scale wind turbines, generally comprise a substantially hollow blade shell made primarily of composite materials, such as glass-fibre reinforced plastic. Referring to Figure 1, this shows a cross-sectional view of a known wind turbine blade 10. The blade shell is made up of two half shells, a windward shell 12 and a leeward shell 14, which are bonded together along the leading edge 16 and trailing edge 18 of the respective half shells 12, 14. Each half shell 12, 14 is made up of a plurality of glass-fibre fabric layers and other structural components such as foam core material 20 and carbon fibre reinforcements 22.

A pair of shear webs 24 are bonded between the respective half shells 12, 14. The shear webs 24 are longitudinally-extending structures that bridge the two half shells 12, 14 of the blade 10 and serve to transfer shear loads from the blade 10 to a wind turbine hub in use. The shear webs 24 are I-beams, i.e. each shear web 24 is substantially I-shaped in cross section, and comprises a generally vertical web 26 disposed between upper and lower mounting flanges 28, 30. The upper and lower mounting flanges 28, 30 are arranged transversely to the web 26 and define substantially flat surfaces for mounting the shear web 24 to the leeward and windward blade shells 14, 12 respectively. More specifically, the lower mounting flange 30 of each shear web 24 is bonded to a respective shear web mounting region 32 defined on an inner surface 34 of the windward half shell 12, whilst the upper mounting flange 28 of each shear web 24 is bonded to a respective shear web mounting region 36 defined on an inner surface 38 of the leeward half shell 14. In other blades, only a single shear web may be used.

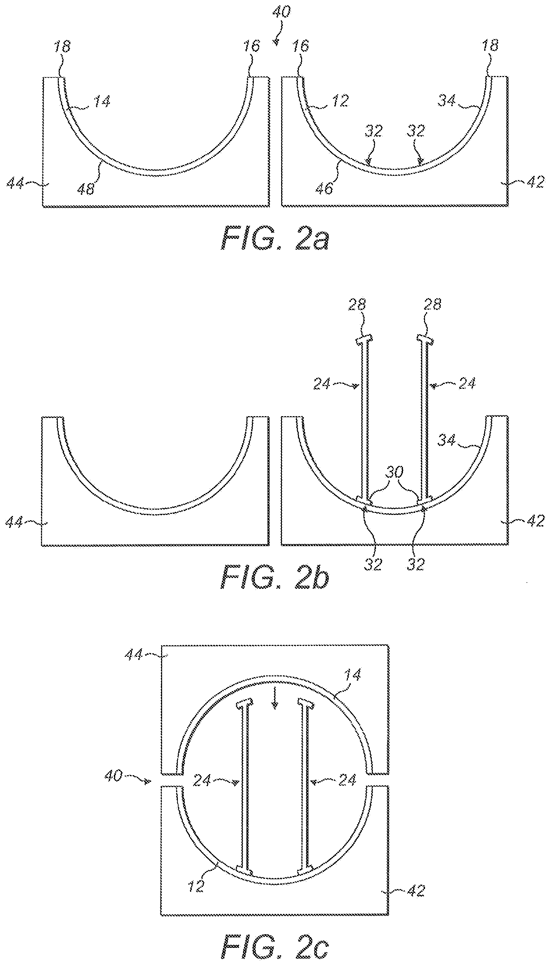

A method of manufacturing the wind turbine blade of Figure 1 will now be described briefly with reference to Figures 2a-2c.

Referring initially to Figure 2a, this shows a mould 40 for the wind turbine blade 10 divided into two female half moulds, a windward mould 42 and a leeward mould 44, which are arranged side by side in an open configuration of the mould 40. The windward blade shell 12 and the leeward blade shell 14 are moulded separately in their respective mould halves 42, 44. As shown in Figure 2a, the windward blade shell 12 is supported on a mould surface 46 of the windward mould 42 and the leeward blade shell 14 is supported on a mould surface 48 of the leeward mould 44.

After forming the blade shells 12, 14 in the respective mould halves 42, 44, adhesive is applied along the leading edge 16 and trailing edge 18 of the windward half shell 12, and/or along the leading edge 16 and trailing edge 18 of the leeward half shell 14. Adhesive is also applied along the shear web mounting regions 32 defined on the inner surface 34 of the windward half shell 12. Further adhesive is applied along the upper mounting flanges 28 of the shear webs 24 (see Figure 2b).

Referring to Figure 2b, once the adhesive has been applied to the various surfaces 16, 18, 28, the shear webs 24 are then lifted into the windward half mould 42 and the lower mounting flanges 30 of the shear webs 24 are positioned against the inner surface 34 of the windward half shell 12 in the mounting regions 32.

Referring now to Figure 2c, once the shear webs 24 have been positioned against the windward blade shell 12, the leeward mould 44, including the leeward blade shell 14, is lifted, turned and placed on top of the windward blade mould 42. This process is referred to as 'closing the mould'. Under the weight of the leeward half shell 14, the adhesive between the respective half shells 12, 14 and the adhesive between the shear webs 24 and the half shells 12, 14 is squeezed at these respective interfaces. With the mould 40 remaining closed, the adhesive is left to cure, i.e. harden. Once the adhesive has cured, the mould 40 is then opened and the completed blade 10 is removed. The cured adhesive firmly bonds the half shells 12, 14 together and firmly bonds the shear webs 24 to the half shells 12, 14.

Typically several tonnes of adhesive are required to join the blades together and to bond the shear webs in place. In the process described above, a significant proportion of the adhesive is squeezed out of the bonding interfaces when the shells are brought together. This adhesive is effectively wasted, yet it still contributes to the overall weight of the completed wind turbine blade, and represents a substantial material cost.

WO2014/086703 describes a method of adhesively joining surfaces in a wind turbine blade by using adhesive arrestor rails.

It is an object of the present invention to provide an improved method of bonding components together to overcome the above problem.

### Summary of the invention

According to the present invention there is provided a method of bonding a shear web to a wind turbine blade shell, the shear web comprising a web and a mounting flange oriented transverse to the web, the method comprising: providing a seal around a periphery of the mounting flange; applying adhesive to an inner surface of the blade shell or to the mounting flange; positioning the shear web relative to the blade shell, after the step of applying adhesive, such that the mounting flange is in mutually opposed relation with the inner surface of the blade shell and such that the seal defines a substantially enclosed cavity between the mounting flange and the inner surface of the blade shell, the cavity containing the adhesive; evacuating air from the cavity such that the mounting flange and the blade shell are forced together; and curing the adhesive.

The method of the present invention is a repeatable process that creates consistently well-defined bondlines. The bondline is defined by the dimensions of the cavity, which is filled with adhesive. Wastage of adhesive is eliminated because the adhesive is contained within the cavity and there is no 'squeeze out' of adhesive. Accordingly, the material cost of the adhesive and the overall weight of the blade is reduced in comparison to the prior art bonding process.

As air is evacuated from the cavity between the blade shell and the mounting flange, the blade shell and the mounting flange are pulled together so that the adhesive is compressed within the cavity. As the air is evacuated, this creates a force between the mounting flange and the blade shell which is uniform over the area between the mounting flange and the blade shell. This provides a constant pressure over the area of the adhesive such that it creates a bond line with a uniform thickness.

The mounting flange and the blade shell are forced together. This means that the two parts are pulled together under the influence of a vacuum or partial vacuum in the enclosed cavity. Air is evacuated from the cavity such that the air pressure in the cavity is below atmospheric pressure.

Preferably the seal is integrated with the mounting flange of the shear web prior to positioning the shear web against the blade shell.

The method preferably comprises removing air from the cavity through one or more vacuum ports in fluid communication with the cavity. The vacuum ports are preferably provided in the mounting flange of the shear web, but may alternatively be provided in any other suitable position such as in the seal or in the blade shell.

The invention thus provides a method of making a wind turbine blade comprising bonding a shear web to an inner surface of a wind turbine blade shell according to the method described above. The blade shell may be a first half shell of the wind turbine blade and the method may further comprise bonding a second half shell to the first half shell.

### Brief description of the drawings

Figures 1 and 2a-2c have already been described above by way of background to the present invention. In order that the present invention may be more readily understood, examples of the invention will now be described with reference to Figures 3-8, in which:
Figure 3 is a perspective view of part of a shear web comprising a web disposed between upper and lower mounting flanges according to an embodiment of the present invention;
Figure 4 is a plan view of an outer surface of the lower mounting flange of the shear web;
Figures 5 to 8 are schematic cross-sectional views of the lower mounting flange of the shear web taken along the line A-A in Figure 3, with the shear web positioned against an inner surface of a blade shell;

### Detailed description

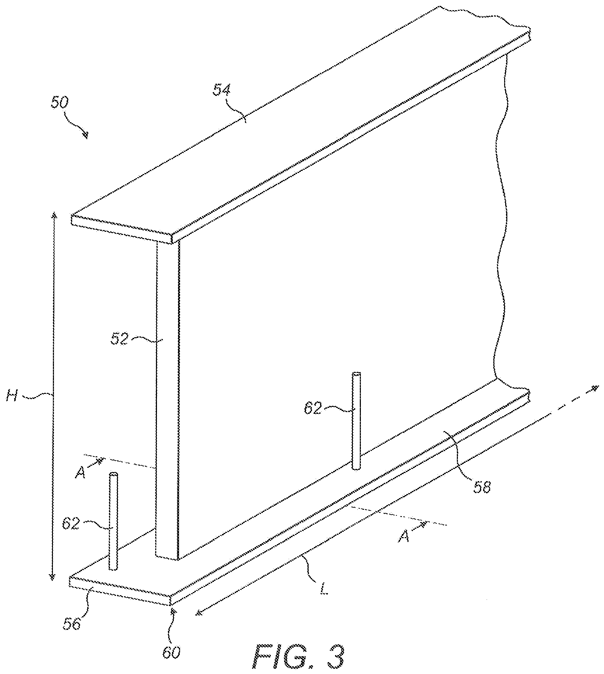

Referring to Figure 3, this shows a first end of a longitudinally-extending shear web 50 according to an embodiment of the present invention. In this example, the shear web 50 is approximately 80 metres in length (L) and varies in height (H) along its length, with a maximum height at one end of about 4.5 metres. The shear web 50 is substantially I-shaped in cross section and comprises a substantially vertical web 52 disposed between upper and lower mounting flanges 54, 56. The mounting flanges 54, 56 are arranged substantially perpendicular to the web 52 in this example, i.e. substantially horizontal.

The lower mounting flange 56 comprises an inner surface 58 and an outer surface 60. The terms 'inner' and 'outer' are relative to a central longitudinal axis of a wind turbine blade in which the shear web 50 is affixed in use (e.g. the central longitudinal axis (C) of the blade 10 in Figure 1, which extends perpendicular to the page in Figure 1).

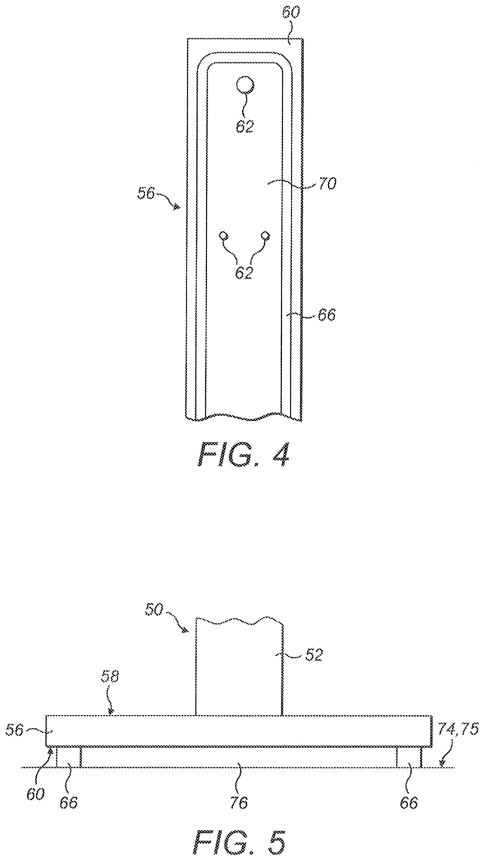

The outer surface 60 of the lower mounting flange 56 is shown in plan view in Figure 4. A seal 66 is provided on the outer surface 60 of the lower mounting flange 56. The seal 66 is a vacuum-tight seal and in this example is made from butyl-rubber. The seal is arranged around the periphery of the mounting flange. In other words, the seal 66 is arranged in a rectangle such that a rectangular cavity 70 is defined within the seal 66. Vacuum ports 62 are provided on the mounting flange 56 and are in fluid communication with the cavity 70.

When the lower mounting flange 56 of the shear web 50 is positioned against a surface (see Figure 5), such as the inner surface 74 of a blade shell 75, the seal 66 defines a substantially rectangular cavity 76 between the lower mounting flange 56 and the surface 74. The cavity 76 is located directly below the web portion 52 of the shear web 50. The vacuum ports 62 are in fluid communication with the cavity 76 in use.

An effective vacuum is applied to the cavity 76 via the vacuum ports 62. In use, a set of vacuum lines are connected to vacuum ports and to a vacuum pump so that air can be evacuated from the cavity 76.

As shown most clearly in Figure 3, the vacuum ports 62 project upwardly from the inner surface 58 of the lower mounting flange 56 for ease of access.

During the manufacture of a wind turbine blade, the shear web 50 is bonded to an inner surface 74 of a blade shell as will now be described.

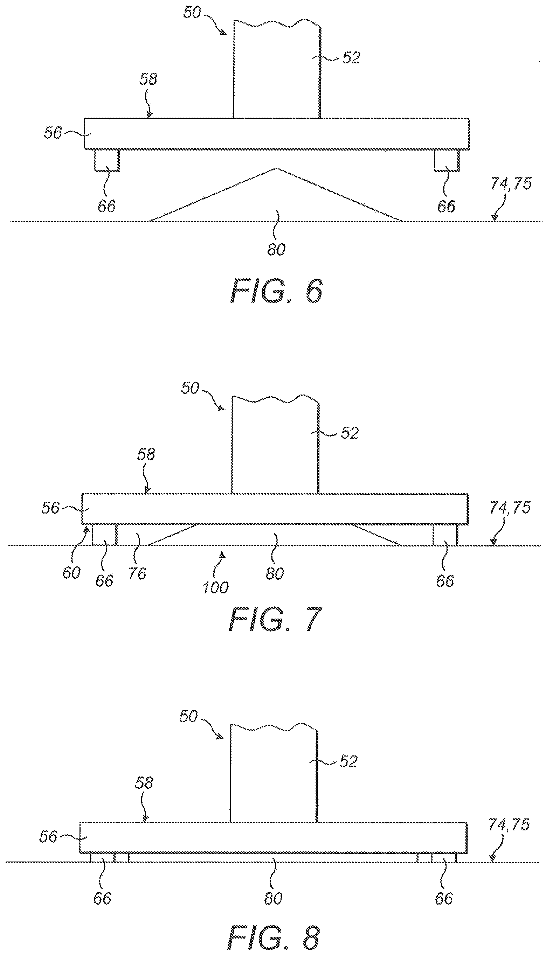

Referring to Figure 6, a bead of adhesive 80 (which in this example is epoxy adhesive) is applied to the inner surface 74 of the blade shell 75. The bead of adhesive 80 extends in the longitudinal direction L. It is important to note that the bead of adhesive 80 is applied to the blade shell 75 before the shear web 50 is brought into contact with the blade shell.

In Figure 7 it can be seen that the shear web 50 has been brought into contact with the blade shell 75 thus forming the cavity 76. The adhesive 80 is now located within the cavity 76. The shear web 50 is initially positioned against the inner surface 74 of the blade shell 75 and arranged such that the web 52 is located over a predefined bonding region 100 defined on the blade shell 75, i.e. the region where a bondline between the shear web 50 and the blade shell 75 is to be created. When positioned against the inner surface 74 of the blade shell 75, the shear web 50 is supported against the surface 74 by the seal 66. In this position the seal 66 is compressed slightly under the weight of the shear web 50.

As the shear web 50 is placed onto the blade shell, the adhesive 80 touches the outer surface 60 of the lower mounting flange 56 such that the adhesive is displaced outwards toward the seal 66.

With the shear web 50 in position against the surface 74 of the blade shell 75, the vacuum pump is turned on. The vacuum pump draws air out of the cavity 76 through the vacuum ports 62. The removal of air from the cavity 76 pulls the lower mounting flange 56 toward the blade shell 75 which compresses the seal 66 as shown in Figure 8. A membrane (or other suitable device) is located at the vacuum ports 62 such that only air is evacuated from the cavity, rather than the adhesive itself.

The lower mounting flange 56 is sucked towards the surface 74 such that the adhesive 80 is forced to fill the cavity 76.

The adhesive 80 is then left to cure, i.e. harden, which results in the lower mounting flange 56 forming a strong bond to the inner surface 74 of the blade shell 75.

As the adhesive is contained within the cavity 76, wastage of adhesive caused by squeeze out, i.e. adhesive spew, is eliminated. This reduces the overall amount of adhesive required in the bondline and hence reduces the overall weight of the completed blade and the materials cost of the adhesive. The dimensions of the resulting bondline between the shear web 50 and the blade shell 75 are advantageously well defined, i.e. they are defined by the dimensions of the cavity 76. The dimensions of the cavity 76 are predefined by the shape of the region bound by the seal 66. The use of a vacuum provides a constant pressure on the adhesive 80 via the lower mounting flange 56. Accordingly, the invention provides a repeatable process for creating consistently well-defined bondlines.

In an example, the seal 66 is integrated with the mounting flange 56 of the shear web 50 prior to positioning the shear web against the blade shell 75. This means that the seal is pre-attached to the shear web and that it is not necessary to place the seal and the shear web on the blade shell as separate elements. This reduces the process time of bonding the shear web to the blade shell.

Many modifications may be made to the above examples without departing from the scope of the present invention as defined in the accompanying claims.

For example, whilst the above examples relate to the creation of a bond between the lower mounting flange 56 of the shear web 50 and the blade shell, the bond could alternatively or additionally be created between the upper mounting flange 54 and the blade shell. If used for the upper mounting flange the adhesive could be applied to the upper mounting flange 56 rather than the blade shell - in this example the bead of adhesive is applied to the upper mounting flange before the blade shell is brought into contact with the shear web.

The process could also be used simultaneously along the upper and lower mounting flanges 54, 56 to bond the shear web 50 to both the windward shell and the leeward shell simultaneously.

Whilst a shear web 50 having an I-shaped cross section is described in the above examples, the shear web 50 may have a different shape in other examples. For example, the shear web 50 may be substantially C-shaped in cross-section or the web 52 may have L-shaped flanges at each end. The mounting flanges 54, 56 need not be perpendicular to the web 52, and in other examples the mounting flanges 54, 56 may be arranged at other transverse angles to the web 52, for example more or less than ninety degrees. The angle of the mounting flanges 54, 56 relative to the web 52 will depend on the local contour of the blade shell at which the shear web 50 is to be fixed, i.e. in a chordwise direction of the blade shell.

Whilst the vacuum ports 62 in the above example are provided in the mounting flange 56 of the shear web 50, the ports may alternatively be provided in other suitable positions. For example, vacuum ports 62 may be provided in the seal 66 or in the blade shell or other such surface to which the shear web 50 is bonded.

For the avoidance of doubt, relative terms such as 'upper' and 'lower' as used in the preceding description are used for convenience and refer to the orientation of features as shown in the figures. These terms are not intended to limit the scope of the invention.

## Claims

1. A method of bonding a shear web (50) to a wind turbine blade shell (75), the shear web comprising a web (52) and a mounting flange (56) oriented transverse to the web, wherein the method comprises:
providing a seal (66) around a periphery of the mounting flange;
applying adhesive (80) to an inner surface (74) of the blade shell or to the mounting
flange (56);
positioning the shear web (50) relative to the blade shell (75), after the step of applying adhesive (80), such that the mounting flange (56) is in mutually opposed relation with the inner surface (74) of the blade shell and such that the seal (66) defines a substantially enclosed cavity (76) between the mounting flange and the inner surface of the blade shell, the cavity containing the adhesive;
evacuating air from the cavity (76) such that the mounting flange (56) and the blade shell (75) are forced together under the influence of a vacuum or partial vacuum in the enclosed cavity; and
curing the adhesive (80).

2. The method of claim 1, wherein the seal (66) is integrated with the mounting flange (56) of the shear web (50) prior to positioning the shear web against the blade shell (75).

3. The method of claim 1 or claim 2, further comprising removing air from the cavity (76) through one or more vacuum ports (62) provided in fluid communication with the cavity.

4. The method of Claim 3, wherein the vacuum ports (62) are provided in the mounting flange (56) of the shear web.

5. A method of making a wind turbine blade comprising bonding a shear web (50) to an inner surface (74) of a wind turbine blade shell (75) according to the method of any preceding claim.

6. The method of Claim 5, wherein the blade shell (75) is a first half shell of the wind turbine blade and the method further comprises bonding a second half shell to the first half shell.

## Patentansprüche

1. Verfahren zum Kleben eines Scherstegs (50) an eine Windkraftanlagenblattschale (75), wobei der Schersteg einen Steg (52) und einen Montageflansch (56), der quer zu dem Steg orientiert ist, umfasst, wobei das Verfahren umfasst:
Bereitstellen einer Dichtung (66) um einen Umfang des Montageflansches;
Auftragen von Klebstoff (80) auf eine Innenfläche (74) der Blattschale oder auf den Montageflansch (56);
Positionieren des Scherstegs (50) relativ zu der Blattschale (75) nach dem Schritt zum Auftragen von Klebstoff (80), sodass der Montageflansch (56) in wechselseitig gegenüberliegender Beziehung mit der Innenfläche (74) der Blattschale ist und sodass die Dichtung (66) einen im Wesentlichen eingeschlossenen Hohlraum (76) zwischen dem Montageflansch und der Innenfläche der Blattschale definiert, wobei der Hohlraum den Klebstoff beinhaltet;
Evakuieren von Luft aus dem Hohlraum (76), sodass der Montageflansch (56) und die Blattschale (75) unter dem Einfluss eines Vakuums oder Teilvakuums in dem eingeschlossenen Hohlraum zueinander gedrängt werden; und
Härten des Klebstoffs (80).

2. Verfahren nach Anspruch 1, wobei die Dichtung (66) mit dem Montageflansch (56) des Scherstegs (50) vor Positionieren des Scherstegs gegen die Blattschale (75) integriert wird.

3. Verfahren nach Anspruch 1 oder Anspruch 2, weiter umfassend Entfernen von Luft aus dem Hohlraum (76) durch einen oder mehrere Vakuumanschlüsse (62), die in strömungstechnischer Verbindung mit dem Hohlraum bereitgestellt sind.

4. Verfahren nach Anspruch 3, wobei die Vakuumanschlüsse (62) in dem Montageflansch (56) des Scherstegs bereitgestellt sind.

5. Verfahren zum Herstellen eines Windkraftanlagenblatts, umfassend Kleben eines Scherstegs (50) an eine Innenfläche (74) einer Windkraftanlagenblattschale (75) gemäß dem Verfahren nach einem vorstehenden Anspruch.

6. Verfahren nach Anspruch 5, wobei die Blattschale (75) eine erste Halbschale des Windkraftanlagenblatts ist und das Verfahren weiter Kleben einer zweiten Halbschale an die erste Halbschale umfasst.

## Revendications

1. Procédé de liaison d'une toile de cisaillement (50) avec une paroi de pale d'éolienne (75), la toile de cisaillement comprenant une toile (52) et une bride de montage (56) orientée transversalement à la toile, dans lequel le procédé comprend :
la fourniture d'un joint (66) autour d'une périphérie de la bride de montage ;
l'application d'un adhésif (80) à une surface intérieure (74) de la paroi de pale ou à la bride de montage (56) ;
le positionnement de la toile de cisaillement (50) par rapport à la paroi de pale (75), après l'étape d'application de l'adhésif (80), de sorte que la bride de montage (56) soit en relation mutuellement opposée avec la surface intérieure (74) de la paroi de pale et de sorte que le joint (66) définisse une cavité sensiblement enfermée (76) entre la bride de montage et la surface intérieure de la paroi de pale, la cavité contenant l'adhésif;
l'évacuation d'air de la cavité (76) de sorte que la bride de montage (56) et la paroi de pale (75) soient poussées à force ensemble sous l'influence d'un vide ou vide partiel dans la cavité enfermée ; et
le durcissement de l'adhésif (80).

2. Procédé selon la revendication 1, dans lequel le joint (66) est intégré avec la bride de montage (56) de la toile de cisaillement (50) avant le positionnement de la toile de cisaillement contre la paroi de pale (75).

3. Procédé selon la revendication 1 ou la revendication 2, comprenant en outre le retrait d'air de la cavité (76) à travers un ou plusieurs orifices de vide (62) prévus en communication fluidique avec la cavité.

4. Procédé selon la revendication 3, dans lequel les orifices de vide (62) sont prévus dans la bride de montage (56) de la toile de cisaillement.

5. Procédé de fabrication d'une pale d'éolienne comprenant la liaison d'une toile de cisaillement (50) avec une surface intérieure (74) d'une paroi de pale d'éolienne (75) selon le procédé selon l'une quelconque des revendications précédentes.

6. Procédé selon la revendication 5, dans lequel la paroi de pale (75) est une première demi-coquille de la pale d'éolienne et le procédé comprend en outre la liaison d'une seconde demi-coquille avec la première demi-coquille.
